# EUROPEAN PATENT APPLICATION

(11) **EP 2 390 547 A2**
(43) Date of publication of application: **30.11.2011**
(21) Application number: 11380043.7
(22) Date of filing: 17.05.2011
(51) Int. Cl.: F16L 55/163, F16L 55/168

(54) **Method for the repair and/or prevention of leaks in pressure vessels or pipes and structural composite reinforcement used**

(30) Priority: 26.05.2010 ES 201000682
(71) Applicant: Grupo Navec Servicios Industriales, SL, 43140 La Pobla de Mafumet Tarragona (ES)
(72) Inventor: Ojeda Olive, Saturnino, 43140 La Pobla de Mafumet (Tarragona) (ES)
(74) Representative: Torner Lasalle, Elisabet

(57) **Abstract**

The method is based on covering the area to be repaired by means of a covering made up of superimposed reinforcement layers and joined to one another by a curable adhesive, then curing said adhesive, forming a composite firmly incorporated to the pipe (1) or vessel, applying pressure on said covering which retains it firmly against said area during curing. Each of the reinforcement layers (4) comprises a sheet element made up of a mesh of a strong at least bidirectional fibre impregnated with a first curable structural adhesive (4), at least one mat (7) of a strong unidirectional fibre, having a smaller surface area, being arranged on said superimposed layers (4), joined to those layers (4) by a second adhesive applied only on the surface, deposited on two outer faces of said mat (4), which is secured to the set of reinforcement layers by an outer retaining overlay (13).

## Description

### Field of the Art

The present invention relates to a method for the repair and/or prevention of leaks applicable to pressure pipes having a defect in their inner or outer wall susceptible to generate a break or leak. The invention is applied particularly to pipes installed out in the open or in aggressive environments, intended for transporting various fluids such as petroleum, gases, water, etc., also being useful for the repair of pressure vessels containing the aforementioned fluids.

In a second aspect, the invention also relates to a structural composite reinforcement used in the implementation of the aforementioned method.

The term composite used in the present specification refers to a polymer composite material containing resin-based, particularly epoxy-based, adhesives and synthetic or mineral fibres, subjected to a curing process.

### Background of the Invention

Many background documents applied to the purpose of the present invention are known, including patents US 2924546, US 4559974, FR 2851635, EP 659255 (Clock Spring), EP 1298267 and W02008/027649, all of them referring mainly to pipes and based on providing an envelopment comprising a series of reinforcement layers, generally of resistant fibres impregnated with a curable adhesive material.

Patent US 6276401 relates to a method for applying a structural composite reinforcement on the outer surface of a pressure vessel.

Patent US 7370670 proposes a moulded sleeve which surrounds the defective area of a pipe and includes an insert formed by a series of coiled high resistance filaments embedded in the sleeve.

In addition, the description of the use of carbon fibres to provide a structural enveloping reinforcement for pipes appears in several patent documents, including patents US 7387138, US 7673654 and W02006/116953.

The present invention proposes a method for the repair and/or prevention of leaks and a structural reinforcement used therein which is characterised by providing a first function of reinforcement and additional function of reducing pressure in the event of an incidental leak in the repaired section which reduces and/or limits the seriousness of said leak.

### Summary of the Invention

The method of this invention, like the state of the art described above in the referred background documents, is based on providing on an area to be repaired, whether it is a pressure pipe or a vessel, a covering made up of several superimposed reinforcement layers attached to the aforementioned area to be repaired and joined to one another by at least one curable adhesive, then subsequently curing said adhesive until forming a composite firmly incorporated to the pipe or vessel, applying pressure on said covering to retain it firmly applied against said area to be repaired during part of the curing period.

According to this invention, each of the aforementioned reinforcement layers, the number of which varies depending on the resistance to the pressure to be withstood, comprises a sheet element made up of a mesh of a first strong at least bidirectional fibre, such as glass fibre, impregnated with a first curable structural adhesive, at least one mat of a second strong unidirectional fibre, such as carbon fibre, having a smaller surface area, being arranged on said number of superimposed layers and joined to the previous layers by a second adhesive which is only applied to the surface, deposited on two outer surface faces of said mat, which is secured to the set of reinforcement layers by an outer retaining overlay.

The aforementioned carbon fibre mat has an extension that is at least sufficient to cover the aforementioned area to be repaired, but less than the extension of the set of superimposed reinforcement layers on which it is arranged, being retained on all sides by said superimposed outer retaining overlay and by the upper sheet element of the set of reinforcement layers to which it is attached, said mat providing a pressure reducing element when the composite has consolidated in the event of a leak, which remains trapped in an internal maze provided by said generally braided unidirectional fibres.

The aforementioned first adhesive is an epoxy-based structural adhesive having a peel strength and a shear-tensile strength with values of the order of 30 N/mm², after it is cured.

In addition, said second adhesive is an epoxy-based structural adhesive having high compressive or impact strength.

### Brief Description of the Drawings

The foregoing and other advantages and features will be better understood from the following detailed description of several embodiments in reference to the attached drawings, in which:
Figure 1 depicts a perspective view of a pipe with a damaged portion.
Figure 2 illustrates said damaged portion of the pipe on which initial reinforcement layers are provided.
Figure 3 depicts a preparation of a stratum in the form of a mat.
Figure 4 illustrates the damaged portion of the pipe in which the initial reinforcement layers and the aforementioned mat have been incorporated.
Figure 5 depicts the subsequent phase of securing the aforementioned reinforcement layers and mat with an outer retaining overlay.
Figure 6 illustrates the final appearance of the aforementioned pipe once said outer retaining overlay has been applied.
Figure 7 is an enlarged longitudinal cross section taken along a portion of plane VII-VII of Figure 6 above, in which the different reinforcement layers applied on the pipe in question can be seen.

And Figure 8 illustrates an expanded perspective view of different reinforcement layers in the form of a patch to apply on a damaged surface of a tank for example.

### Detailed Description of an Embodiment

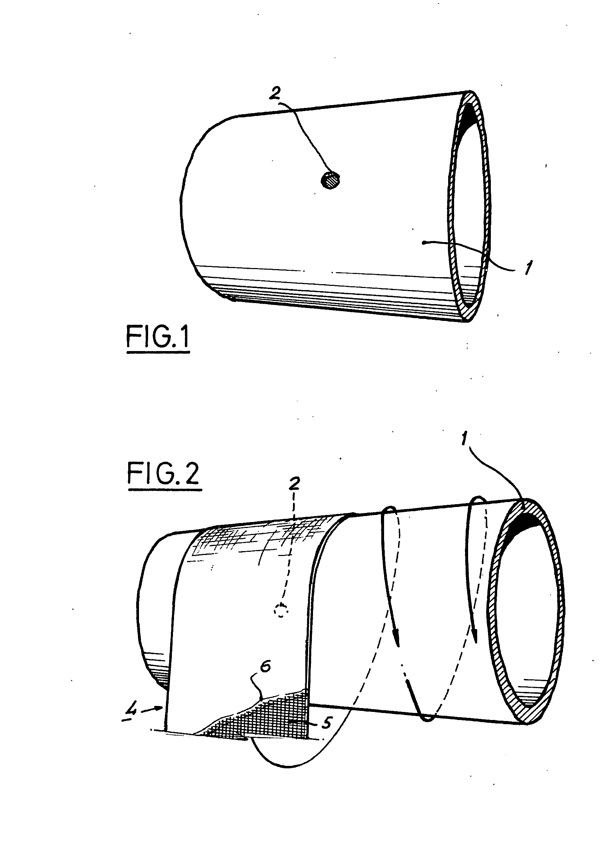

Referring first to Figures 1 and 2, the method for the repair and/or prevention of leaks in pressure vessels or pipes object of the invention first comprises applying on an area greater than the damaged part of the pipe 1 due, for example, to a hole or crack 2 which, if it is on the outside, will be cleaned and filled with a composite (fill of resin mixtures and cured) according to a known technique, one or more reinforcement layers 4 according to the resistance to the pressure to be withstood, each of which layers is formed by a sheet element formed by a dense mesh of a first strong fibre 5 such as glass, quartz or aramid fibre, which can be bidirectional, quadrangular, impregnated with or embedded in a first curable structural adhesive 6 which can be epoxy-based having a peel strength and a shear-tensile strength of the order of 30 N/mm², after it is cured.

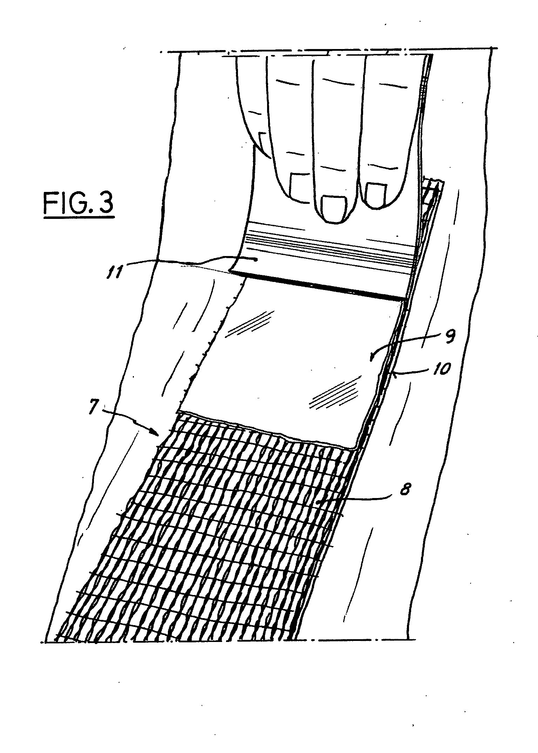

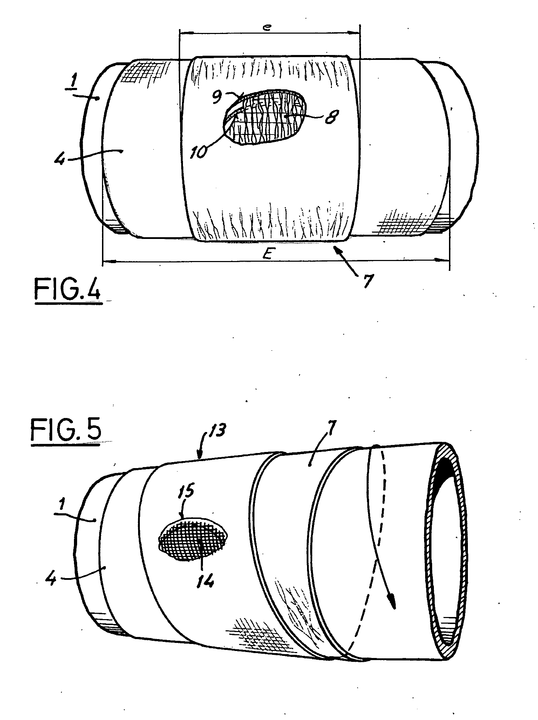

Then (Figure 3) a mat 7 formed by a second strong unidirectional fibre 8 selected from carbon fibre and Kevlar, braided along a series of parallel directions which will be perpendicularly aligned in relation to the pipe 1, is prepared and said mat is covered only superficially on both outer faces 9, 10 by a second epoxy-based adhesive having high compressive or impact strength, or it may be of the same nature as the first adhesive, applying said second adhesive for example by means of an instrument 11 such as a brush, trowel or spatula. At least the mat 7 thus prepared is arranged on the previous reinforcement layer or layers 4, which mat will have a surface area "e" less than the surface area "E" of the previous reinforcement layers 4, as shown in Figure 4.

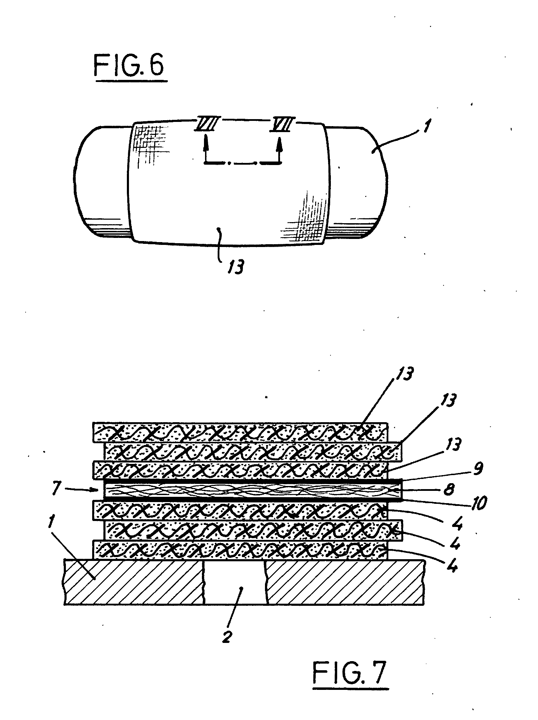

Finally, the described set of reinforcement layers 4 and mat 7 (Figures 5 and 6) is secured by an outer retaining overlay 13 obtained from superimposed mesh-type reinforcement layers of the aforementioned first strong bidirectional fibre 14, fixed to one another by a structural adhesive 15 impregnating them, such as the initial reinforcement layers indicated in the description of Figure 1.

Figure 7 shows in an enlarged section the described general arrangement of the first reinforcement layers 4, mat 7, and outer retaining overlay 13 applied on a pipe 1 damaged by a crack or hole 2.

Based on what has been described and illustrated above, it can be deduced that the application of the different layers 4, 7, 13 on a damaged pipe 1 is carried out by tightly coiling several continuous strips forming the aforementioned respective layers on said pipe or on a tank of relatively small diameter (not shown) as indicated by the arrows of Figures 2 and 5, the quantity of layers of each class being determined by the number of turns around the pipe 1.

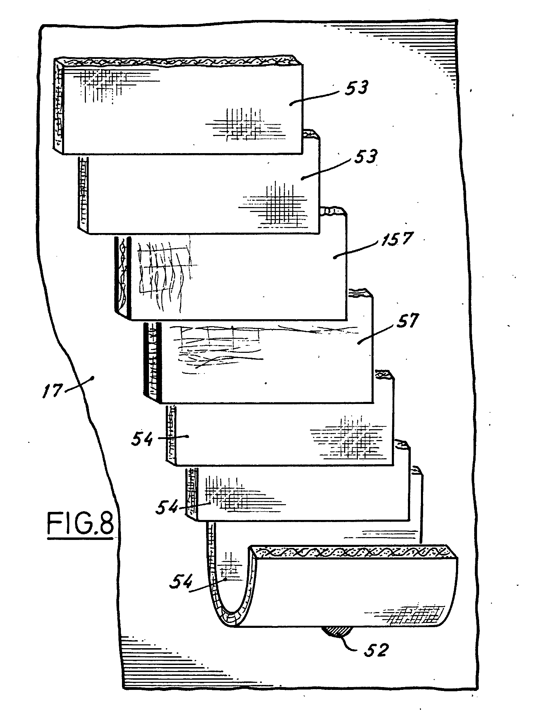

In contrast, when larger tanks 17 are involved in the repair and/or prevention of leaks on the same, the plurality of reinforcement layers will form a patch applicable to an area greater than the hole or crack 52 of the surface of the tank 17 the layer and corresponding adhesive organisation of which is similar to that indicated for the case of a pipe, i.e., reinforcement layers 54 and outer overlay layers 53, with the exception that at least two mats 57, 157 the fibres of which are braided and aligned in parallel series will be arranged between them, the fibres of one mat 57 being perpendicular to the fibres of the other mat 157. Said arrangement can be clearly seen in Figure 8, where the proportions of the different layers and mats are purely illustrative.

In both described cases (pipe or tank), both said first adhesive and the aforementioned second adhesive will be compatible with the thermal conditions of the fluid circulating through the pipe 1 or stored in the tank 17.

The area to be repaired after forming an envelopment or patch and during curing is covered by a covering canvas or envelopment (not illustrated) and said environment is sealed subsequently applying a controlled vacuum.

In short, the structural reinforcement described, the composite for the repair and/or prevention of leaks in pressure vessels or pipes which, as the adhesives cure, forms an enveloping sleeve of a sector of the pipe 1 having a length greater than the damaged area to be repaired, forming an extremely hard composite firmly incorporated to the pipe 1 or vessel 17.

In addition, the mat 7 the extension or surface area "e" of which is at least sufficient to cover the aforementioned area to be repaired, is fixed on all sides by the outer retaining overlay 13 and by the sheet element of the set of reinforcement layers, said mat 7 providing a pressure reducing element when the composite has consolidated in the event of a leak, which remains trapped in an internal maze provided by said unidirectional fibres.

A person skilled in the state of the art will be able to introduce changes and modifications in the shown and described embodiments without departing from the scope of the present invention as it is defined in the attached claims.

## Claims

1. A method for the repair and/or prevention of leaks in pressure vessels or pipes based on covering a section greater than the area to be repaired by means of a covering made up of several superimposed reinforcement layers attached to the mentioned area to be repaired and joined to one another by at least one curable adhesive, then curing said adhesive to form a composite firmly incorporated to the pipe or vessel, applying pressure on said covering to retain it firmly applied against said area to be repaired during part of the curing period, **characterised in that** each of said reinforcement layers (4, 54), the number of which varies depending on the resistance to the pressure to be withstood, comprises a sheet element made up of a mesh (5) of a first strong at least bidirectional fibre impregnated with a first curable structural adhesive (6), at least one mat (7, 57, 157) of a second strong unidirectional fibre (8), having a smaller surface area, being arranged on said number of superimposed layers (4, 54), joined to the previous layers (4, 54) by a second adhesive which is only applied on the surface, deposited on two outer surface faces (9, 10) of said mat (7, 57, 157), which is secured to the set of reinforcement layers (4, 54) by an outer retaining overlay (13, 53).

2. The method according to claim 1, **characterised in that** the aforementioned mat (7, 57, 157) has an extension (e) that is at least sufficient to cover the aforementioned area to be repaired, but less than the extension (E) of the set of superimposed reinforcement layers (4, 54) on which it is arranged, said mat (7, 57, 157) being retained on all sides by said superimposed outer retaining overlay (13, 53) and by the upper sheet element of the set of reinforcement layers (4, 54) to which it is attached, said mat (7, 57, 157) providing a pressure reducing element when the composite has consolidated in the event of a leak, which remains trapped in an internal maze provided by said unidirectional fibres.

3. The method according to claim 1 or 2, **characterised in that** said outer retaining overlay (13, 53) is obtained from superimposed mesh-type reinforcement layers (14) of said first strong bidirectional fibre, fixed to one another by a curable structural adhesive (15) impregnating them.

4. The method according to claim 1, **characterised in that** said first strong fibre (5) is selected from glass, quartz or aramid, and is configured in the form of a dense quadrangular mesh.

5. The method according to any of the claims 1 or 4, **characterised in that** said second strong fibre (8) is selected from carbon fibre and Kevlar and is braided along a series of parallel directions.

6. The method according to claim 1, **characterised in that** when the defect to be repaired is in a pipe (1), said layers (4,13) of a first strong fibre (5) are provided in the form of a continuous strip impregnated with the aforementioned structural adhesive (6) which is tightly coiled onto the pipe (1) like a bandage, intercalating the mat (7) of unidirectional fibres (8) and maintaining the tension and as the adhesives cure, forming an enveloping sleeve on a sector of the pipe (1) having a length greater than the area to be repaired.

7. The method according to claim 6, **characterised in that** the aforementioned mat (7) of a second strong fibre (8) is arranged in relation to the pipe (1) with its fibres aligned perpendicularly in the direction of the longitudinal axis of said pipe (1).

8. The method according to claim 1, **characterised in that** when the defect to be repaired is in a tank (17), the plurality of reinforcement layers (54) form a patch which is applied by maintaining pressure against a wall of the vessel (17) in the area to be repaired, and **in that** in this case two superimposed mats (57, 157) of said second strong unidirectional fibre, with their unidirectional fibres interwoven, each of them being covered only superficially with said second adhesive, are used, wherein the unidirectional fibres of the two mats (57, 157) cross perpendicularly.

9. The method according to claim 8, **characterised in that** the area to be repaired after forming an envelopment or patch and during curing is covered by a covering canvas or envelopment and said environment is sealed subsequently applying a controlled vacuum.

10. The method according to claim 1, **characterised in that** said first adhesive (6) is an epoxy-based structural adhesive having a peel strength and a shear-tensile strength of the order of 30 N/mm², after it is cured.

11. The method according to claim 1, **characterised in that** said second adhesive (9, 10) is an epoxy-based structural adhesive having high compressive or impact strength.

12. The method according to claim 1, **characterised in that** that both said first adhesive (6) and said second adhesive (9, 10) are compatible with the thermal conditions of the fluid circulating through the pipe (1) or stored in the tank (17).

13. The method according to claim 1, **characterised in that** said mat (7) comprises a combination of at least two strong unidirectionally braided fibres, and said mesh (5) of a first fibre comprises a warping with the threads interlaced in several directions.

14. A structural composite reinforcement for the repair and/or prevention of leaks in pressure vessels or pipes formed by a covering made up of several superimposed reinforcement layers attached to an area to be repaired and joined to one another by at least one curable adhesive which, after it is cured, provides a composite firmly incorporated to the pipe or vessel, **characterised in that** each of said reinforcement layers (4, 54), the number of which varies depending on the resistance to the pressure to be withstood, comprises a sheet element made up of a mesh (5) of a first strong at least bidirectional fibre impregnated with a first curable structural adhesive (6), and at least one mat (7, 57, 157) of a second strong unidirectional fibre (8), having a smaller surface area, arranged on said number of superimposed layers, joined to the previous layers by a second adhesive which is applied only on the surface, on two outer surface faces (9, 10) of said mat (7, 57, 157), which is secured to the set of reinforcement layers (4, 54) by an outer retaining overlay (13, 53).

15. The structural reinforcement according to claim 14, **characterised in that** the aforementioned mat (7, 57, 157) has an extension (e) that is at least sufficient to cover the aforementioned area to be repaired, but less than the extension (E) of the set of superimposed reinforcement layers (4, 54) on which it is arranged, said mat (7, 57, 157) being fixed on all sides by said superimposed outer retaining overlay (13, 53) and by the upper sheet element of the set of reinforcement layers (4, 54), to which it is attached, said mat (7, 57, 157) providing a pressure reducing element when the composite has consolidated in the event of a leak, which remains trapped in an internal maze provided by said unidirectional fibres.
